# EUROPÄISCHE PATENTSCHRIFT

(11) **EP 3 833 509 B1**
(45) Veröffentlichungstag und Bekanntmachung des Hinweises auf die Patenterteilung: **02.07.2025**
(21) Anmeldenummer: 19801687.5
(22) Anmeldetag: 24.10.2019
(51) Int. Cl.: B23Q 17/12, G05B 19/416

(54) **BEDIENERDEFINIERTE RATTERVERMEIDUNG**
USER-DEFINED VIBRATION AVOIDANCE
ÉLIMINATION DE VIBRATIONS DÉFINIE PAR L'UTILISATEUR

(30) Priorität: 05.11.2018 EP 18204305
(43) Veröffentlichungstag der Anmeldung: 16.06.2021
(73) Patentinhaber: Siemens Aktiengesellschaft, 80333 München (DE)
(72) Erfinder: BRETSCHNEIDER, Jochen, 88696 Owingen (DE)
(74) Vertreter: Siemens Patent Attorneys
(86) Internationale Anmeldenummer: PCT/EP2019/079018
(87) Internationale Veröffentlichungsnummer: WO 2020/094409

(56) Entgegenhaltungen:
- DE-A1- 102004 016 731
- DE-A1- 2 415 503
- DE-A1- 4 405 660
- DE-B3- 102010 026 947
- DE-B3- 102010 026 947
- YONG XIA: "Experimental implementation of artificial neural network-based active vibration control & chatter suppression", RYERSON UNIVERSITY, 1 January 2010 (2010-01-01), XP093040877, Retrieved from the Internet <URL:https://scholar.archive.org/work/y7jgqnvj5nbqtofemzkhmxxxyi/access/wayback/https://s3.ca-central-1.amazonaws.com/pstorage-ryerson-5010877717/28148997/Xia_Yong.pdf> [retrieved on 20230420]
- YONG XIA: "Experimental implementation of artificial neural network-based active vibration control & chatter suppression", RYERSON UNIVERSITY, 1 January 2010 (2010-01-01), XP093040877, Retrieved from the Internet <URL:https://scholar.archive.org/work/y7jgqnvj5nbqtofemzkhmxxxyi/access/wayback/https://s3.ca-central-1.amazonaws.com/pstorage-ryerson-5010877717/28148997/Xia_Yong.pdf> [retrieved on 20230420]

## Beschreibung

Die vorliegende Erfindung geht aus von einem Bearbeitungsverfahren nach Anspruch 1.

Die vorliegende Erfindung geht weiterhin aus von einem Steuerprogramm nach Anspruch 6.

Die vorliegende Erfindung geht weiterhin aus von einer Steuereinrichtung nach Anspruch 7.

Aus der Druckschrift DE 10 2004 016731 A1 ist eine Dämpfungsvorrichtung zum Dämpfen mechanischer Schwingungen bei einer Werkzeugmaschine bekannt. Es ist vorgesehen, dass die Schwingungen von Mikroaktoren, die in der Nähe eines Tool Center Points platziert sind, erfasst und mit einem entsprechenden Regelkreis gedämpft werden. Für den Mehrachskopf einer Werkzeugmaschine bedeutet dies, dass die Mikroaktoren, die zur Positionierung des Kopfs verwendet werden, gleichzeitig auch zur Erfassung und Dämpfung von Eigenschwingungen eingesetzt werden.

Der Regelkreis der Dämpfungsvorrichtung kann mehrere zuschaltbare Rückführglieder umfassen. Diese werden günstigerweise jeweils mit einer Bandsperre ausgestattet, wobei die einzelnen Bandsperren unterschiedliche Sperrfrequenzen besitzen. Damit ist es möglich, spezifische Schwingungen in definierbare Situationen zu einem ebenfalls definierbaren Maß zu unterdrücken. Mittels Schalter S1, S2 bis Sn sind unterschiedliche Rückführglieder in die Rückkoppelung schaltbar.

Aus der Druckschrift DE 44 05 660 A1 ist eine Anordnung zum Betreiben einer spanabhebenden Werkzeugmaschine, insbesondere Kreissäge-, Fräs-, Schleifmaschine oder dergleichen bekannt. Mittels eines Prozessmodells, welches der Beschreibung des dynamischen Verhaltens insbesondere von Kreissägemaschinen dient, wird unter Nutzung aktueller Zustandssignale und mittels eines Host-Rechners ein nicht optimales Betriebsverhalten der betreffenden Werkzeugmaschine festgestellt und die Betriebsparameter derart eingestellt, dass ein Betreiben der Maschine unter Vermeidung instabiler Zustände gewährleistet ist. Beim Auftreten einer mittels eines speziellen Sensors gemessenen maschinentypischen Schwingung wird über den Host-Rechner die Schnitt- und Vorschubgeschwindigkeit der Werkzeugmaschine derart geändert, dass die Schwingung abklingt. Alternativ kann mittels des Host-Rechners eine Vorgabe des Verlaufs der Schnitt- und Vorschubgeschwindigkeit über den Sägehub so erfolgen, dass bei veränderlicher Eingriffsgröße, z. B. dem Sägen von Rundmaterial, zu keinem Zeitpunkt eine abnormale Schwingung auftritt, wobei die entsprechenden einzuhaltenden Schnitt- und Vorschubgeschwindigkeiten offline modellgestützt ermittelt werden. Mit dem bekannten Verfahren der digitalen adaptiven Grenzsteuerung oder -regelung erfolgt eine Einbindung der Stabilitätsanalyse des Werkstückbearbeitungsprozesses in eine flexible, optimierte Maschinensteuerung unter Nutzung entsprechender Sensorik.

Aus der Druckschrift DE 24 15 503 A1 ist eine Schaltungsanordnung zur Aufbereitung der Messgröße "Schwingung" für die adaptive Regelung an Werkzeugmaschinen bekannt, wobei aus der erfassten Schwingung ein bestimmter Frequenzbereich herausgefiltert, die Schwingungsamplitude ermittelt sowie gegenüber einem voreingestellten Sollwert bewertet wird und das Bewertungsergebnis zur Beeinflussung eines Bearbeitungsparameters beim Zerspanungsvorgang an der Werkzeugmaschine Verwendung findet.

Bei der spanenden Bearbeitung von Werkstücken durch Werkzeugmaschinen kann es zu einer unerwünschten Anregung von Schwingungen kommen. Die Schwingungen können an der Werkzeugmaschine, am Werkstück oder am Werkzeug auftreten. Sie sind in Fachkreisen als sogenanntes Rattern bekannt. Rattern führt in aller Regel zu einer qualitativ minderwertigen Oberfläche des bearbeiteten Werkstücks. Weiterhin führt Rattern zu erhöhtem Verschleiß in Lagern und Führungen der Werkzeugmaschine. In manchen Fällen kann es sogar zu direkten Schäden kommen, beispielsweise zu einem Brechen des Werkzeugs.

Zur Vermeidung des Ratterns sind verschiedene Vorgehensweisen bekannt. Im einfachsten Fall werden eine Vorschubgeschwindigkeit und/oder eine Spindeldrehzahl, mit der das Werkzeug oder das Werkstück rotiert werden, reduziert. In diesem Fall erfolgt, sofern durch die ergriffene Maßnahme das Rattern vermieden werden kann, zwar eine ordnungsgemäße Bearbeitung des Werkstücks, jedoch mit erhöhtem Zeitaufwand und damit mit verringerter Produktivität. Es sind auch andere Vorgehensweisen bekannt. Beispielsweise ist bekannt, einer an sich vorgegebenen und konstanten Spindeldrehzahl eine Oszillation zu überlagern, so dass die tatsächliche Spindeldrehzahl um die vorgegebene Spindeldrehzahl herum variiert.

Die bekannten Maßnahmen werden in der Praxis aber nur selten eingesetzt. In der Praxis greift vielmehr in der Regel eine Bedienperson der Werkzeugmaschine manuell in die Bearbeitung ein. Insbesondere verstellt die Bedienperson in der Regel mittels sogenannter Overrides die Vorschubgeschwindigkeit und/oder die Spindeldrehzahl. Meist führt dies sehr schnell zu einem Abklingen des Ratterns. Die Vorgehensweise ist insbesondere deshalb oftmals von großem Erfolg geprägt, weil die Bedienperson aufgrund der technologischen Kenntnis des Bearbeitungsvorgangs oftmals sehr gut weiß, an welchen Stellen der Bearbeitung Rattern auftreten kann und wie dem Rattern begegnet werden kann. Hierbei ist jedoch nicht bei jedem Bearbeitungsvorgang dieselbe Maßnahme erfolgreich. Vielmehr hängt es vom konkreten Bearbeitungsvorgang ab, ob - beispielsweise - eine Reduzierung der Spindeldrehzahl oder eine Reduzierung der Vorschubgeschwindigkeit oder eventuell sogar eine Erhöhung der Spindeldrehzahl oder der Vorschubgeschwindigkeit dazu führt, dass das Rattern nicht mehr auftritt.

Die Aufgabe der vorliegenden Erfindung besteht darin, Möglichkeiten zu schaffen, mittels derer die Bedienperson auf einfache und zuverlässige Weise ihr Erfahrungswissen in den Bearbeitungsprozess einbringen kann und dadurch ein Rattern zumindest in der weitaus überwiegenden Mehrzahl von Fällen vermieden werden kann.

Die Aufgabe wird durch ein Bearbeitungsverfahren mit den Merkmalen des Anspruchs 1 gelöst. Vorteilhafte Ausgestaltungen des Bearbeitungsverfahrens sind Gegenstand der abhängigen Ansprüche 2 bis 5.

Erfindungsgemäß wird diese Aufgabe bei einem Bearbeitungsverfahren der eingangs genannten Art dadurch gelöst, dass die Parametrierung eine Haltezeit spezifiziert, während derer die modifizierte Sollbearbeitung nach einer Modifizierung der Bearbeitung unverändert beibehalten wird, wobei in dem Fall, dass nach einer Modifizierung der Bearbeitung des Werkstücks die unerwünschten Schwingungen nicht mehr auftreten, die Modifikation wieder rückgängig gemacht wird.

Es wird also die Möglichkeit geschaffen, auf einfache Weise konkret für den jeweiligen Bearbeitungsvorgang zu spezifizieren, wie die Steuereinrichtung in dem Fall, dass die unerwünschten Schwingungen (= Rattern) auftreten, reagieren soll. Damit besteht für die Bedienperson die Möglichkeit, Erfahrungswissen in die Steuereinrichtung einzubringen.

Die Regeln als solche sind also zwar innerhalb der Steuereinrichtung bereits vordefiniert. Es besteht aber die Möglichkeit, auszuwählen, welche Regeln angewandt werden sollen. Erfindungsgemäß besteht die Möglichkeit, die ausgewählten Regeln zu parametrieren. Auch besteht die Möglichkeit, die Reihenfolge der Regeln zu spezifizieren. Die Reihenfolge spezifizieren heißt, dass für eine bestimmte Regel festgelegt wird, welche in der Reihenfolge vorhergehenden Regeln zuvor erfolglos ausgeführt worden sein müssen, bevor die bestimmte Regel ausgeführt wird. Im Rahmen der vorliegenden Erfindung stellt die Steuereinrichtung der Bedienperson somit die vordefinierten Regeln als solche - beispielsweise im Rahmen des Betriebssystems der Steuereinrichtung - als Rüstzeug zur Verfügung. Diese bereits vordefinierten Regeln muss die Bedienperson lediglich noch selektieren, parametrieren und/oder deren Reihenfolge spezifizieren.

Beispielsweise kann die Parametrierung eine Schrittweite einer Änderung eines die Kontur des Werkstücks nicht beeinflussenden Bearbeitungsparameters der Sollbearbeitung spezifizieren. Dadurch kann das Rattern unterdrückt werden, ohne die Kontur des fertigen Werkstücks zu beeinflussen. Beispiele derartiger Bearbeitungsparameter sind insbesondere eine Spindeldrehzahl und eine Vorschubgeschwindigkeit. Es kommen aber auch andere Bearbeitungsparameter in Frage, beispielsweise Parameter von Regelkreisen, insbesondere Proportionalverstärkungen und/oder Nachstellzeiten von Lagereglern.

Es ist prinzipiell möglich, dass die Steuereinrichtung beim Auftreten der unerwünschten Schwingungen die spezifizierten Bearbeitungsparameter immer weiter ändert. Vorzugsweise aber spezifiziert die Parametrierung einen Maximalwert der Änderung des die Kontur des Werkstücks nicht beeinflussenden Bearbeitungsparameters der Sollbearbeitung. Dadurch kann gewährleistet werden, dass der jeweilige Bearbeitungsparameter innerhalb eines technologisch sinnvollen Bereichs bleibt.

Erfindungsgemäß spezifiziert die Parametrierung eine Haltezeit, während derer die modifizierte Sollbearbeitung nach einer Modifizierung der Bearbeitung unverändert beibehalten wird. Dadurch wird erreicht, dass nach einer Modifizierung der Bearbeitung, also nach beispielsweise einer Änderung eines Bearbeitungsparameters, zunächst abgewartet wird, ob das Rattern abklingt und die Bearbeitung sich somit stabilisiert.

Im einfachsten Fall wird nur eine einzelne Regel mit einem einzigen Bearbeitungsparameter vorgegeben. Es ist jedoch ebenso möglich, dass durch entsprechende Auswahl, Parametrierung und/oder Spezifizierung der Reihenfolge der Regeln auch eine Abfolge und/oder eine Kopplung der Änderung mehrerer die Kontur des Werkstücks nicht beeinflussender Bearbeitungsparameter der Sollbearbeitung spezifiziert werden. Beispielsweise kann vorgegeben werden, dass zunächst ein Bearbeitungsparameter (beispielsweise die Spindeldrehzahl) geändert wird, wenn diese Änderung jedoch nicht zu einem Abklingen des Ratterns führt, danach zusätzlich ein anderer die Kontur des Werkstücks nicht beeinflussender Bearbeitungsparameter der Sollbearbeitung (beispielsweise die Vorschubgeschwindigkeit) geändert wird. Auch kann spezifiziert werden, dass im Falle eines Ratterns simultan mehrere Bearbeitungsparameter geändert werden, beispielsweise sowohl die Spindeldrehzahl als auch die Vorschubgeschwindigkeit. Auch andere Ausgestaltungen sind möglich.

Im Ergebnis kann also durch die Auswahl oder die Parametrierung der Regeln festlegt werden, welcher die Kontur des Werkstücks nicht beeinflussende Bearbeitungsparameter der Sollbearbeitung geändert wird bzw. welche die Kontur des Werkstücks nicht beeinflussende Bearbeitungsparameter der Sollbearbeitung geändert werden.

Erfindungsgemäß spezifiziert die Auswahl oder Parametrierung der Regeln dass in dem Fall, dass nach einer Modifizierung der Bearbeitung des Werkstücks die unerwünschten Schwingungen nicht mehr auftreten, die Modifikation wieder rückgängig gemacht wird. In vielen Fällen tritt das Rattern nur an einigen Stellen der Bearbeitung auf. In diesem Fall würde die Werkzeugmaschine mit reduzierter Produktivität arbeiten, ohne dass dies erforderlich ist.

Vorzugsweise spezifiziert die Parametrierung der Regeln in diesem Fall auch, in welchen Stufen die Modifikation wieder rückgängig gemacht wird. Die Stufen korrespondieren im Kern mit der Schrittweite bei der Modifikation. Es ist aber möglich, sie unabhängig von der Schrittweite bei der Modifikation festzulegen.

Vorzugsweise spezifizieren die Regeln eine Haltezeit, während derer die Bearbeitung nach einer Rückgängigmachung unverändert beibehalten wird. Dadurch kann vor einer noch weiteren Rückgängigmachung abgewartet werden, ob sich nicht doch wieder ein Rattern einstellt.

Vorzugsweise spezifizieren die Regeln, welche Maßnahmen ergriffen werden, wenn die unerwünschten Schwingungen trotz Modifikation der Bearbeitung weiterhin auftreten. Beispielsweise kann dadurch die Möglichkeit gegeben werden, trotz Rattern die Bearbeitung durchzuführen (und eine eventuell erforderliche Nachbearbeitung anderweitig vorzunehmen) oder - beispielsweise zur Vermeidung von Maschinenschäden oder zur Vermeidung der Produktion von Ausschuss - die Bearbeitung abzubrechen.

Vorzugsweise speichert die Steuereinrichtung dann, wenn nach einer Modifikation der Bearbeitung die unerwünschten Schwingungen nicht mehr auftreten, die aufgefundene Art der Bearbeitung ab, so dass sie bei einer späteren Bearbeitung eines weiteren, zu dem Werkstück gleichartigen Werkstücks wieder abrufbar ist. Dadurch ist es möglich, bei der späteren Bearbeitung des Weiteren Werkstücks entweder an der entsprechenden Stelle der Bearbeitung - alternativ unbedingt oder nur in dem Fall, dass an der entsprechenden Stelle der Bearbeitung wieder ein Rattern auftritt, - direkt die aufgefundene Art der Bearbeitung abzurufen. Dadurch kann beispielsweise ein zeitaufwändiges und bezüglich der Bearbeitung suboptimales Herantasten an die ordnungsgemäße Art der Bearbeitung vermieden werden.

Die Aufgabe wird weiterhin durch ein Steuerprogramm mit den Merkmalen des Anspruchs 6 gelöst. Erfindungsgemäß bewirkt die Abarbeitung des Maschinencodes durch die Steuereinrichtung, dass die Steuereinrichtung ein erfindungsgemäßes Betriebsverfahren ausführt.

Die Aufgabe wird weiterhin durch eine Steuereinrichtung mit den Merkmalen des Anspruchs 7 gelöst. Erfindungsgemäß ist die Steuereinrichtung mit einem erfindungsgemäßen Steuerprogramm programmiert, so dass die Steuereinrichtung im Betrieb ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und ihre Komponenten,
- FIG 2: ein Ablaufdiagramm,
- FIG 3 bis 9: Regeln und
- FIG 10: ein Ablaufdiagramm.

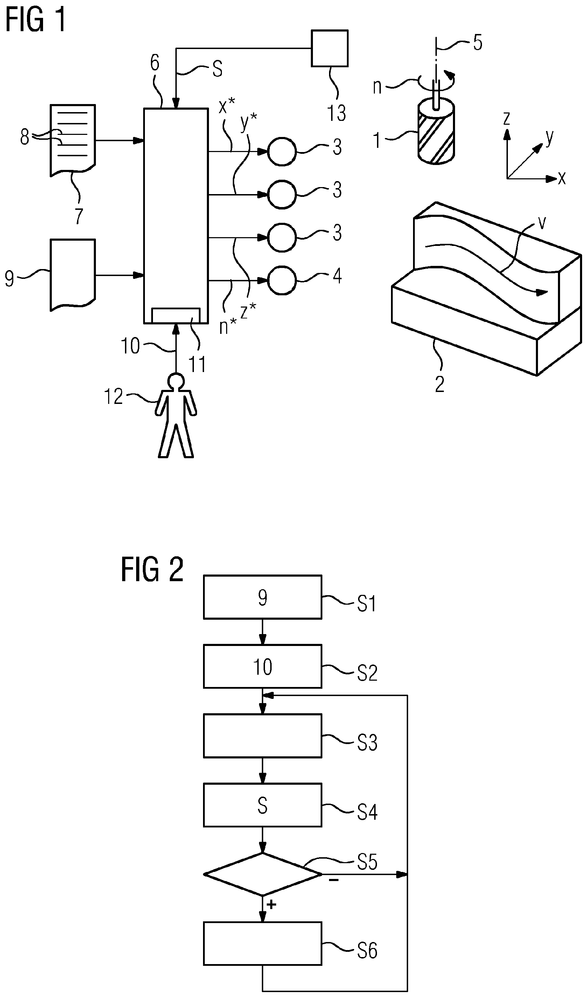

Gemäß FIG 1 soll mittels eines Werkzeugs 1 einer Werkzeugmaschine ein Werkstück 2 spanabhebend bearbeitet werden. Die spanabhebende Bearbeitung kann beispielsweise ein Fräsen sein. Zur Bearbeitung des Werkstücks 2 wird das Werkzeug 1 relativ zum Werkstück 2 mittels einer Anzahl von lagegeregelten Achsen 3 der Werkzeugmaschine lagegeregelt an das Werkstück 2 angestellt. Mittels der Achsen 3 kann nach Bedarf die translatorische Position x, y, z und gegebenenfalls auch die rotatorische Orientierung des Werkzeugs 1 relativ zum Werkstück 2 eingestellt werden. Die Sollwerte x*, y*, z* für die lagegeregelten Achsen 3 und damit die Position x, y, z und gegebenenfalls auch die Orientierung des Werkzeugs 1 relativ zum Werkstück 2 werden kontinuierlich geändert. Das Werkzeug 1 wird dadurch mit einer Bahngeschwindigkeit v entlang einer abzufahrenden Bahn verfahren. Während des Verfahrens des Werkzeugs 1 relativ zum Werkstück 2 wird weiterhin mittels einer weiteren Achse 4 der Werkzeugmaschine das Werkzeug 1 mit einer Drehzahl n um eine Rotationsachse 5 des Werkzeugs 1 rotiert. Der weiteren Achse 4 kann ein entsprechender Drehzahlsollwert n* vorgegeben werden. In diesem Fall ist die weitere Achse 4 drehzahlgeregelt. Alternativ kann die weitere Achse 4 auch lagegeregelt betrieben werden. In diesem Fall muss der vorgegebene Lagesollwert entsprechend variiert werden.

Die Werkzeugmaschine wird von einer Steuereinrichtung 6 gesteuert. Die Steuereinrichtung 6 ist in der Regel als numerische Steuerung ausgebildet. Die Steuereinrichtung 6 ist mit einem Steuerprogramm 7 programmiert. Das Steuerprogramm 7 umfasst Maschinencode 8, der von der Steuereinrichtung 6 abarbeitbar ist. Die Programmierung der Steuereinrichtung 6 mit dem Steuerprogramm 7 bzw. die Abarbeitung des Maschinencodes 8 durch die Steuereinrichtung 6 bewirkt, dass die Steuereinrichtung 6 ein Betriebsverfahren ausführt, das nachstehend in Verbindung mit FIG 2 näher erläutert wird.

Gemäß FIG 2 nimmt die Steuereinrichtung 6 in einem Schritt S1 eine Sollbearbeitung 9 entgegen. Entsprechend der Sollbearbeitung 9 soll das Werkstück 2 durch das Werkzeug 1 bearbeitet werden. In der Sollbearbeitung 9 sind neben der Abfolge der Lagesollwerte x*, y*, z* (und damit der zu abzufahrenden Bahn) auch Bearbeitungsparameter wie beispielsweise der Drehzahlsollwert n* für die weitere Achse 4 und ein Sollwert v* für die Bahngeschwindigkeit v abschnittsweise spezifiziert. Die Sollbearbeitung 9 kann beispielsweise in Form eines Fachleuten allgemein bekannten Teileprogramms vorgegeben werden.

In der Steuereinrichtung 6 sind vordefinierte Regeln 10 gespeichert. Die Regeln 10 definieren, auf welche Art und Weise die Bearbeitung des Werkstücks 2 durch das Werkzeug 1 modifiziert werden soll, wenn während der Bearbeitung des Werkstücks 2 durch das Werkzeug 1 unerwünschte Schwingungen auftreten. Mögliche Regeln 10 werden später noch näher erläutert werden. Wichtig ist aber, dass durch die Regeln 10 nicht die herzustellende Kontur des Werkstücks 2 geändert wird, sondern Bearbeitungsparameter, welche die Kontur nicht beeinflussen. Beispiele derartiger Bearbeitungsparameter sind die bereits erwähnte Bahngeschwindigkeit v und die ebenfalls bereits erwähnte Drehzahl n. Insbesondere können die Regeln 10 eine Schrittweite δn, δv der Änderung des entsprechenden Bearbeitungsparameter n, v der Sollbearbeitung 9 spezifizieren.

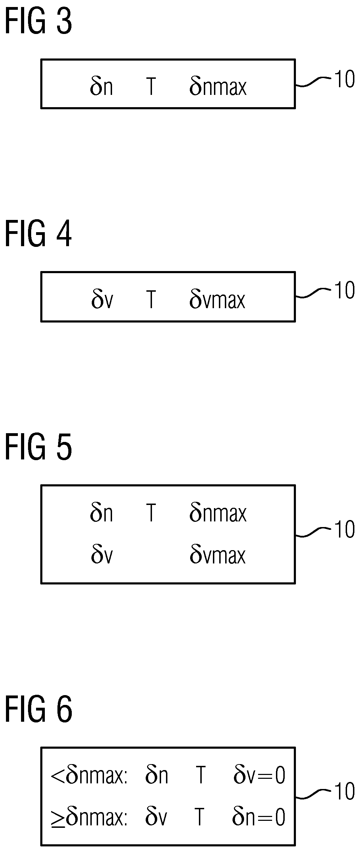

Die Steuereinrichtung 6 nimmt in einem Schritt S2 eine Auswahl, eine Parametrierung und/oder eine Spezifizierung einer Reihenfolge der Regeln 10 (siehe FIG 3 bis 9) entgegen. Dadurch können die Regeln 10 spezifisch für die jeweilige Sollbearbeitung 9 definiert werden. Die Auswahl, die Parametrierung und/oder die Spezifizierung der Reihenfolge können der Steuereinrichtung 6 entsprechend der Darstellung in FIG 1 über eine Mensch-Maschine-Schnittstelle 11 von einer Bedienperson 12 vorgegeben werden. Alternativ können sie der Steuereinrichtung 6 über eine entsprechende Schnittstelle über eine Speichereinrichtung vorgegeben werden. In diesem Fall liest die Steuereinrichtung 6 die Auswahl, die Parametrierung und/oder die Spezifizierung der Reihenfolge aus der Speichereinrichtung aus. Die Speichereinrichtung ist außerhalb der Steuereinrichtung 6 angeordnet. Sie kann lösbar mit der Steuereinrichtung 6 verbindbar sein (beispielsweise im Falle einer Ausgestaltung der Schnittstelle 11 als USB-Schnittstelle) oder (beispielsweise im Falle der Ausgestaltung der Schnittstelle 11 als Anbindung an ein Rechnernetz) Bestandteil eines anderen Rechners sein.

Entsprechend der Darstellung in FIG 2 wird der Schritt S1 vor dem Schritt S2 ausgeführt. Es könnte aber auch umgekehrt sein. Entscheidend ist, dass die Vorgabe der Auswahl, der Parametrierung und/oder der Spezifizierung der Reihenfolge der Regeln 10 vor der Bearbeitung des Werkstücks 2 durch das Werkzeug 1 erfolgt.

In einem Schritt S3 beginnt die Steuereinrichtung 6 sodann mit der Bearbeitung des Werkstücks 2 durch das Werkzeug 1. Dies erfolgt dadurch, dass die Steuereinrichtung 6 die Werkzeugmaschine und insbesondere die lagegeregelten Achsen 3 und die weitere Achse 4 entsprechend der Sollbearbeitung 9 steuert. Dadurch wird das Werkstück 2 entsprechend der spezifizierten Sollbearbeitung 9 bearbeitet.

Während der Bearbeitung des Werkstücks 2 erfasst die Steuereinrichtung 6 in einem Schritt S4 mittels (mindestens) eines Sensors 13 ein Sensorsignal S. Aufbauend auf dem Schritt S4 prüft die Steuereinrichtung 6 durch Auswertung des Sensorsignals S in einem Schritt S5, ob während der Bearbeitung des Werkstücks 2 durch das Werkzeug 1 eine unerwünschte Schwingung (= Rattern) auftritt. Geeignete Sensorsignale S sind Fachleuten allgemein bekannt. Das erfasste Sensorsignal S kann beispielsweise ein Schallsignal (Luftschall oder Körperschall), eine Störung in der Drehzahl n des Werkzeugs 1 oder ein anderes Signal sein. Es kann diesbezüglich auf die bereits erwähnte WO 2017/012 801 A1 verwiesen werden.

Wenn die Steuereinrichtung 6 im Schritt S5 kein Rattern feststellt, geht die Steuereinrichtung 6 zum Schritt S3 zurück. Sie setzt also die Bearbeitung des Werkstücks 2 durch das Werkzeug 1 ohne Modifikation der Sollbearbeitung 9 fort. Wenn die Steuereinrichtung 6 im Schritt S5 hingegen ein Rattern feststellt, geht die Steuereinrichtung 6 zu einem Schritt S6 über. Im Schritt S6 modifiziert die Steuereinrichtung 6 die Bearbeitung des Werkstücks 2 durch das Werkzeug 1 entsprechend der Regeln 10. Die Steuereinrichtung 6 berücksichtigt hierbei die Auswahl, die Parametrierung und/oder die Spezifizierung der Reihenfolge der Regeln 10.

Nachstehend werden in Verbindung mit den FIG 3 bis 9 mögliche Regeln 10 und mögliche Parametrierungen erläutert.

Beispielsweise ist es möglich, dass eine Parametrierung für eine Regel 10 darin besteht, dass entsprechend der Darstellung in FIG 3 für die Regel 10 als Regelparameter eine Drehzahländerung δn vorgegeben wird. In diesem Fall wird, falls Rattern auftritt und die entsprechende Regel 10 ausgeführt wird, die Solldrehzahl n* (und in der Folge auch die tatsächliche Drehzahl n) um die Drehzahländerung δn geändert. Die Drehzahländerung δn wird in der Regel negativ sein (Absenken der Drehzahl n). Sie kann aber im Einzelfall auch positiv sein (Erhöhen der Drehzahl n).

Erfindungsgemäß wird im Falle der in FIG 3 dargestellten Regel 10 im Rahmen von deren Parametrierung ein weiterer Regelparameter vorgegeben, nämlich eine Haltezeit T. Die Haltezeit T spezifiziert, wie lange nach einer Anwendung der Regel 10 die entsprechende Regel 10 nicht erneut angewandt wird. Nach einer Modifizierung wird also die modifizierte Sollbearbeitung während der Haltezeit T unverändert beibehalten. Dadurch wird erreicht, dass sich der transiente Zustand der Werkzeugmaschine, der durch das Ändern der Drehzahl n entsteht, wieder in einen stabilen Zustand übergeht. Erst danach wird erneut geprüft, ob weiterhin Rattern auftritt.

Alternativ oder zusätzlich zur Haltezeit T kann im Falle der in FIG 3 dargestellten Regel 10 im Rahmen von deren Parametrierung ein weiterer Regelparameter vorgegeben werden, nämlich eine maximale Drehzahländerung δnmax. Die maximale Drehzahländerung δnmax gibt an, um welchen Wert die Drehzahl n durch (gegebenenfalls wiederholte) Anwendung der in FIG 3 dargestellten Regel 10 maximal geändert werden darf. Die maximale Drehzahländerung δnmax hat das gleiche Vorzeichen wie die Drehzahländerung δn. Anstelle der maximalen Drehzahländerung δnmax könnte auch ein entsprechender Zahlenwert vorgegeben werden, beispielsweise dass die in FIG 3 dargestellte Regel maximal fünfmal oder achtmal angewandt werden darf.

Der guten Ordnung halber sei darauf hingewiesen, dass der Begriff "Regelparameter" verwendet wird, um einen Parameter für eine Regel (englisch: rule) 10 zu bezeichnen. Der Begriff "Regelparameter" steht im Gegensatz zu einem Bearbeitungsparameter, der einen Parameter der Bearbeitung bzw. der Sollbearbeitung bezeichnet, beispielsweise die Vorschubgeschwindigkeit v oder die Drehzahl n. Hingegen wird der Begriff "Regelparameter" nicht im Sinne eines Parameters eines Regelkreises (englisch: closed loop control) wie beispielsweise dessen Proportionalverstärkung verwendet.

In FIG 3 ist eine Regel 10 dargestellt, bei welcher im Falle von Rattern die Drehzahl n des Werkzeugs 1 geändert wird. In analoger Weise ist es entsprechend der Darstellung in FIG 4 möglich, eine gleichartige Regel 10 für die Bahngeschwindigkeit v zu formulieren. Auch hier wird als Regelparameter zumindest ein Wert für die Geschwindigkeitsänderung δv vorgegeben, wobei die Geschwindigkeitsänderung δv vorzugsweise durch eine Haltezeit T und/oder eine maximale Geschwindigkeitsänderung δvmax als weitere Regelparameter ergänzt ist. Die Geschwindigkeitsänderung δv ist in der Regel negativ (Verringerung der Geschwindigkeit v), kann in Ausnahmefällen aber auch positiv sein (Erhöhung der Geschwindigkeit v). Die Haltezeit T kann unabhängig von der Haltezeit T von FIG 3 spezifiziert werden.

Es ist auch möglich, eine Regel 10 zu formulieren, bei welcher mehrere die Kontur des Werkstücks 2 nicht beeinflussende Bearbeitungsparameter der Sollbearbeitung 9 spezifiziert werden. Beispielsweise kann entsprechend der Darstellung in FIG 5 eine Regel 10 definiert sein, in der sowohl eine Drehzahländerung δn als auch eine Geschwindigkeitsänderung δv vorgegeben werden. In diesem Fall können, falls maximale Änderungswerte δnmax, δvmax mit spezifiziert (parametriert) werden, die maximale Drehzahländerung δnmax und die maximale Geschwindigkeitsänderung δvmax (entsprechende Regelparameter) unabhängig voneinander festgelegt werden. Durch die Vorgabe unterschiedlicher maximaler Änderungen δnmax, δvmax kann beispielsweise erreicht werden, dass beim Auftreten von Rattern zunächst sowohl die Drehzahl n als auch die Bahngeschwindigkeit v geändert werden. Wenn jedoch später erneut Rattern auftritt, wird gegebenenfalls nur noch derjenige Bearbeitungsparameter n, v geändert, dessen Änderung ihren Maximalwert δnmax, δvmax noch nicht erreicht hat. Die Haltezeit T ist jedoch - zumindest in der Regel - einheitlich für beide Änderungen. Auch hier kann Haltezeit T aber unabhängig von der Haltezeit T der FIG 3 und 4 spezifiziert werden.

Weiterhin können die Auswahl, Parametrierung und/oder Spezifizierung der Reihenfolge der Regeln 10 auch eine Abfolge von mehreren die Kontur des Werkstücks 2 nicht beeinflussenden Parametern der Sollbearbeitung 9 spezifizieren. Beispielsweise kann entsprechend der Darstellung in FIG 6 eine Regel 10 definiert sein, gemäß der die Geschwindigkeitsänderung δv den Wert 0 aufweist (also keine Änderung der Bahngeschwindigkeit v vorgenommen wird), solange die Drehzahländerung δn noch nicht ihren Maximalwert δnmax erreicht hat. Wenn dies hingegen der Fall ist, wird im Falle eines weiteren Ratterns eine Geschwindigkeitsänderung δv vorgenommen. Auch hier können nach Bedarf wieder eine Haltezeit T und/oder eine maximale Geschwindigkeitsänderung δvmax parametriert werden. Auch diese Haltezeit T kann unabhängig von den Haltezeiten T der FIG 3 bis 5 parametriert werden. Auch können die beiden Haltezeiten T der Regel 10 von FIG 6 alternativ einheitlich oder unabhängig voneinander parametriert werden.

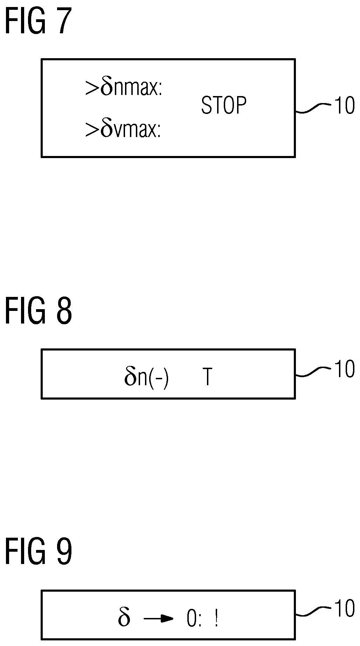

Weiterhin ist es möglich, durch entsprechende Auswahl oder Parametrierung eine Regel 10 zu spezifizieren, in der vorgegeben wird, welche Maßnahmen ergriffen werden, wenn das Rattern trotz Modifikation der Bearbeitung weiterhin auftritt. Beispielsweise kann entsprechend der Darstellung in FIG 7 vorgegeben werden, dass in diesem Fall ein Abbruch ("STOP") der Bearbeitung erfolgen soll.

Es ist sogar möglich, zu spezifizieren, ob nach einer Modifizierung der Bearbeitung des Werkstücks 2 die Modifikation in dem Fall, dass das Rattern nicht mehr auftritt, wieder rückgängig gemacht wird. Beispielsweise kann entsprechend der Darstellung in FIG 8 durch entsprechende Parametrierung eine mit der Regel 10 von FIG 3 korrespondierende Regel 10 spezifiziert werden, gemäß der die Modifikation der Drehzahl n des Werkzeugs 1 wieder rückgängig gemacht wird, sofern nach der Modifikation das Rattern nicht mehr auftritt. Die Drehzahländerung δn von FIG 8 spezifiziert, in welchen Stufen die Modifikation von Regel 3 wieder rückgängig gemacht wird.

Das Vorzeichen der Drehzahländerung δn von FIG 8 muss invers zum Vorzeichen der Drehzahländerung δn von FIG 3 sein. Dies ist in FIG 8 dadurch angedeutet, dass der dort spezifizierten Drehzahländerung δn in Klammern ein "-" nachgestellt ist. Der Betrag der Drehzahländerung δn von FIG 8 kann aber unabhängig vom Wert der Drehzahländerung δn von FIG 3 bestimmt werden. Auch die Haltezeit T kann, sofern sie parametriert wird, unabhängig von den Haltezeiten T der FIG 3 bis 6 parametriert werden. Der Maximalwert der Änderung der Regel 10 gemäß FIG 8 ergibt sich ganz von selbst dadurch, dass bei einem Gesamtwert der Änderung von 0 die Drehzahl n wieder erreicht ist, die durch die Sollbearbeitung 9 spezifiziert ist.

Zu der Regel 10 von FIG 8 analoge Regeln 10 sind selbstverständlich auch für die Regeln 10 gemäß den FIG 4 bis 6 implementierbar.

Es ist sogar möglich, eine Regel 10 vorzugeben, gemäß der die Steuereinrichtung 6 die aufgefundene Art der Bearbeitung abspeichert, wenn nach einer Modifikation der Bearbeitung das Rattern nicht mehr auftritt. Die Ausführung dieser Regel 10 setzt entsprechend der Darstellung in FIG 9 zunächst voraus, dass überhaupt eine Modifikation der Bearbeitung des Werkstücks 2 vorgenommen wurde, angedeutet in FIG 9 durch ein "δ". Weiterhin muss die Steuereinrichtung 6 feststellen, dass nach der Modifikation der Bearbeitung das Rattern nicht mehr auftritt. Dies ist in FIG 9 durch einen von dem "δ" zu einer 0 zeigenden Pfeil angedeutet. Das Abspeichern ist in FIG 9 durch ein "!" angedeutet. Dadurch ist die abgespeicherte Art der Bearbeitung bei einer späteren Bearbeitung eines weiteren, zu dem Werkstück 2 gleichartigen Werkstücks wieder abrufbar, so dass sie gegebenenfalls - mit oder ohne vorherige Prüfung, ob bei dem gleichartigen Werkstück ebenfalls ein Rattern auftritt - sofort anwendbar ist.

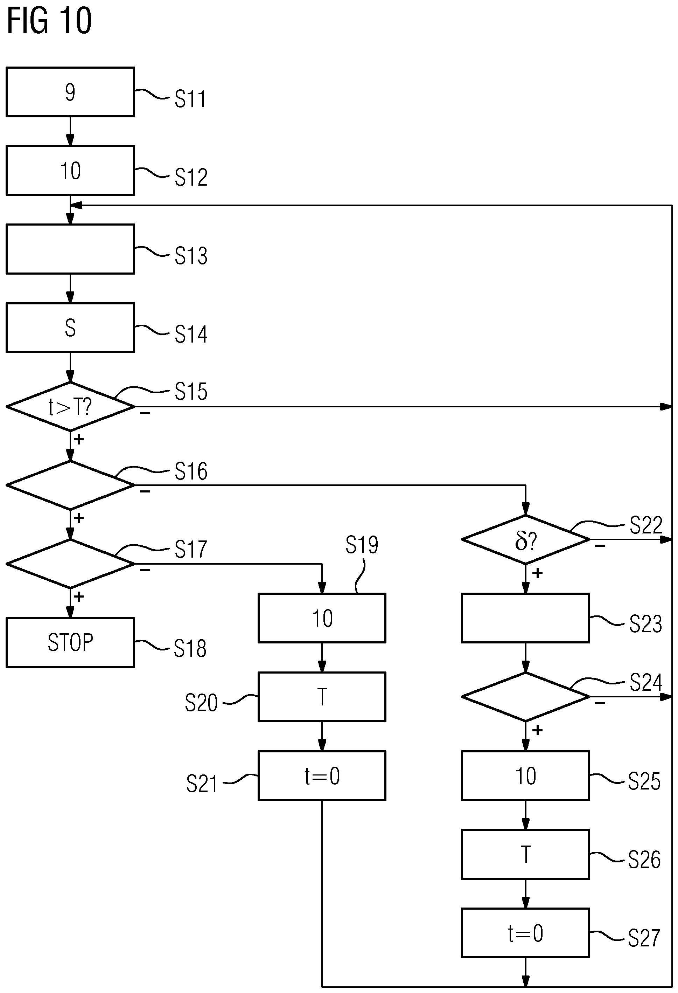

Das obenstehend in Verbindung mit FIG 2 bereits erläuterte Prinzip der vorliegenden Erfindung kann daher entsprechend FIG 10 ausgestaltet sein. FIG 10 zeigt hierbei zwar gleichzeitig eine Kombination mehrerer vorteilhafter Ausgestaltungen der erfindungsgemäßen Vorgehensweise. Die vorteilhaften Ausgestaltungen sind jedoch unabhängig voneinander implementierbar.

Gemäß FIG 10 nimmt die Steuereinrichtung 6 in einem Schritt S11 eine Sollbearbeitung 9 entgegen. Weiterhin nimmt die Steuereinrichtung 6 in einem Schritt S12 eine Auswahl, eine Parametrierung und/oder eine Spezifizierung einer Reihenfolge der Regeln 10 entgegen. In einem Schritt S13 beginnt die Steuereinrichtung 6 sodann mit der Bearbeitung des Werkstücks 2 durch das Werkzeug 1. Während der Bearbeitung des Werkstücks 2 erfasst die Steuereinrichtung 6 in einem Schritt S14 mittels (mindestens) eines Sensors 13 ein Sensorsignal S. Die Schritte S11 bis S14 korrespondieren 1:1 mit den Schritten S1 bis S4 von FIG 2.

In einem Schritt S15 prüft die Steuereinrichtung 6, ob eine aufgelaufene Zeit t eine Haltezeit T übersteigt. Auf die Festlegung der relevanten Haltezeit T wird später noch eingegangen. Solange die aufgelaufene Zeit t die Haltezeit T nicht übersteigt, geht die Steuereinrichtung 6 zum Schritt S13 zurück. Anderenfalls prüft die Steuereinrichtung 6 durch Auswertung des Signals in einem Schritt S16, ob während der Bearbeitung des Werkstücks 2 durch das Werkzeug 1 Rattern auftritt. Der Schritt S16 korrespondiert 1:1 mit dem Schritt S5 von FIG 2.

Falls Rattern auftritt, prüft die Steuereinrichtung 6 in einem Schritt S17, ob das Rattern trotz Modifikation der Bearbeitung weiterhin auftritt. Die Prüfung des Schrittes S17 kann beispielsweise mit umfassen, ob zulässige Änderungen von Parametern n, v der Bearbeitung des Werkstücks 2 bereits ihre maximalen Änderungswerte δnmax, δvmax erreicht haben.

Falls die Steuereinrichtung 6 im Schritt S17 feststellt, dass das Rattern trotz Modifikation der Bearbeitung weiterhin auftritt, führt die Steuereinrichtung 6 in einem Schritt S18 diejenige Regel 10 aus, in der spezifiziert ist, wie in diesem Fall verfahren werden soll. Beispielsweise kann die Steuereinrichtung 6 entsprechend der Darstellung in FIG 10 - vergleiche die in FIG 7 dargestellte Regel 10 - die weitere Bearbeitung des Werkstücks 2 abbrechen.

Anderenfalls, wenn also die Bearbeitung noch nicht modifiziert wurde oder die zulässigen Änderungen von Bearbeitungsparametern n, v der Bearbeitung des Werkstücks 2 ihre maximalen Änderungswerte δnmax, δvmax noch nicht erreicht haben, modifiziert die Steuereinrichtung 6 in einem Schritt S19 die Bearbeitung des Werkstücks 2 durch das Werkzeug 1 entsprechend der selektierten und/oder parametrierten Regeln 10, gegebenenfalls unter Berücksichtigung der Reihenfolge der Regeln 10. Der Schritt S19 entspricht im Wesentlichen dem Schritt S6 von FIG 2.

In einem Schritt S20 setzt die Steuereinrichtung 6 die durch die entsprechende Regel 10 definierte Haltezeit T. Weiterhin setzt die Steuereinrichtung 6 in einem Schritt S21 die aufgelaufene Zeit t auf den Wert 0. Sodann geht die Steuereinrichtung 6 zum Schritt S13 zurück.

Wenn die Steuereinrichtung 6 im Schritt S16 feststellt, dass kein Rattern auftritt, geht die Steuereinrichtung 6 zu einem Schritt S22 über. Im Schritt S22 prüft die Steuereinrichtung 6, ob bereits eine Modifikation erfolgt ist. Wenn dies nicht der Fall ist, geht die Steuereinrichtung 6 zum Schritt S13 zurück. Anderenfalls speichert die Steuereinrichtung 6 in einem Schritt S23 die aufgefundene Art der Bearbeitung, beispielsweise die aktuelle Drehzahl n und/oder die aktuelle Bahngeschwindigkeit v.

In einem Schritt S24 prüft die Steuereinrichtung 6, ob sie die zuvor vorgenommene Modifikation wieder rückgängig machen soll. Wenn dies nicht der Fall ist, geht die Steuereinrichtung 6 zum Schritt S13 zurück. Anderenfalls macht die Steuereinrichtung 6 in einem Schritt S25 (selbstverständlich unter Anwendung der entsprechenden Regeln 10) die zuvor vorgenommene Modifikation vollständig oder teilweise wieder rückgängig. In einem Schritt S26 setzt die Steuereinrichtung 6 die durch die entsprechende Regel 10 definierte Haltezeit T. Weiterhin setzt die Steuereinrichtung 6 in einem Schritt S27 die aufgelaufene Zeit t auf den Wert 0. Sodann geht die Steuereinrichtung 6 zum Schritt S13 zurück.

Selbstverständlich sind auch weitere Ausgestaltungen möglich. So ist es beispielsweise möglich, dass die Steuereinrichtung 6 zwischen der Ausführung der Schritte S16 und S17 prüft, ob für die Situation der Bearbeitung des Werkstücks 2, die gerade ansteht, bereits eine Art der Bearbeitung gespeichert ist, bei der kein Rattern auftritt. In diesem Fall kann die Steuereinrichtung 6 gegebenenfalls die entsprechende Art der Bearbeitung direkt anwählen und von dort aus direkt zum Schritt S13 zurückgehen. Weiterhin ist es auch möglich, andere Regeln 10 zu spezifizieren, beispielsweise eine Regel 10, deren Ausführung eine Modulation der Drehzahl n bewirkt, oder eine Regel 10, deren Ausführung eine Änderung von Reglerparametern der lagegeregelten Achsen 3 und/oder der drehzahlgeregelten Achse 4 bewirkt, also von Parametern der Regelkreise der lagegeregelten Achsen 3 und/oder der drehzahlgeregelten Achse 4. Auch ist es möglich, dass die Steuereinrichtung 6 über die Schnittstelle 11 zusätzlich eine Meldung ausgibt, wenn ein Rattern festgestellt wurde. Falls ein Rattern durch Modifikation der Bearbeitung beseitigt wurde, ist es weiterhin möglich, dass die Steuereinrichtung 6 die entsprechenden Modifikationen über die Schnittstelle 11 ausgibt.

Die vorliegende Erfindung weist viele Vorteile auf. Insbesondere wird der Bedienperson 12 ermöglicht, die vordefinierten Regeln 10 der Steuereinrichtung 6 derart zu selektieren, zu parametrieren und/oder deren Reihenfolge zu spezifizieren, dass die Reaktion der Steuereinrichtung 6 auf Rattern individuell auf die Gegebenheiten der Bearbeitung zugeschnitten ist. Die Bedienperson 12 wird in die Lage versetzt, ihr Erfahrungswissen zur Vermeidung von Rattern direkt in die Steuereinrichtung 6 einzubringen.

## Patentansprüche

1. Bearbeitungsverfahren für ein Werkstück (2) durch ein Werkzeug (1) einer Werkzeugmaschine,
- wobei eine Steuereinrichtung (6) der Werkzeugmaschine eine Sollbearbeitung (9) entgegennimmt, entsprechend derer das Werkstück (2) durch das Werkzeug (1) bearbeitet werden soll,
- wobei die Steuereinrichtung (6) die Werkzeugmaschine steuert, so dass das Werkstück (2) durch das Werkzeug (1) bearbeitet wird,
- wobei die Steuereinrichtung (6) während der Bearbeitung des Werkstücks (2) durch das Werkzeug (1) durch Auswertung erfasster Sensorsignale (S) ermittelt, ob unerwünschte Schwingungen auftreten oder nicht,
- wobei in der Steuereinrichtung (6) vordefinierte Regeln (10) gespeichert sind,
wobei die Regeln (10) definieren, auf welche Art und Weise im Falle von während der Bearbeitung des Werkstücks (2) durch das Werkzeug (1) auftretenden unerwünschten Schwingungen die Bearbeitung des Werkstücks (2) durch das Werkzeug (1) modifiziert werden soll,
- wobei die Steuereinrichtung (6) in dem Fall, dass die unerwünschten Schwingungen nicht auftreten, die Bearbeitung entsprechend der Sollbearbeitung (9) ausführt und in dem Fall, dass die unerwünschten Schwingungen auftreten, die Bearbeitung entsprechend der Regeln (10) modifiziert,
- wobei die Steuereinrichtung (6) der Werkzeugmaschine vor der Bearbeitung des Werkstücks (2) durch das Werkzeug (1) über eine Schnittstelle (11) eine Parametrierung der Regeln (10) entgegennimmt,
- wobei die Schnittstelle (11) als Mensch-Maschine-Schnittstelle ausgebildet ist und die Steuereinrichtung (6) die Parametrierung der Regeln (10) von einer Bedienperson (12 der Werkzeugmaschine entgegennimmt und
- wobei die Steuereinrichtung (6) die Regeln (10) entsprechend der Parametrierung parametriert,
wobei die Parametrierung eine Haltezeit (T) spezifiziert, während derer die modifizierte Sollbearbeitung nach einer Modifizierung der Bearbeitung unverändert beibehalten wird, wobei in dem Fall, dass nach einer Modifizierung der Bearbeitung des Werkstücks (2) die unerwünschten Schwingungen nicht mehr auftreten, die Modifikation wieder rückgängig gemacht wird.

2. Bearbeitungsverfahren nach Anspruch 1,
**dadurch gekennzeichnet,**
**dass** die Parametrierung der Regeln (10) eine Abfolge und/oder eine Kopplung der Änderung mehrerer die Kontur des Werkstücks (2) nicht beeinflussender Bearbeitungsparameter (n, v) der Sollbearbeitung (9) spezifiziert.

3. Bearbeitungsverfahren nach Anspruch 1 oder 2,
**dadurch gekennzeichnet,**
**dass** die Parametrierung der Regeln (10) festlegt, welcher die Kontur des Werkstücks (2) nicht beeinflussende Bearbeitungsparameter (n, v) der Sollbearbeitung geändert wird bzw. welche die Kontur des Werkstücks (2) nicht beeinflussende Bearbeitungsparameter (n, v) der Sollbearbeitung geändert werden.

4. Bearbeitungsverfahren nach einem der obigen Ansprüche,
**dadurch gekennzeichnet,**
**dass** die Parametrierung der Regeln (10) spezifiziert, in welchen Stufen (δn, δv) die Modifikation wieder rückgängig gemacht wird.

5. Bearbeitungsverfahren nach einem der obigen Ansprüche,
**dadurch gekennzeichnet,**
**dass** die Steuereinrichtung (6) dann, wenn nach einer Modifikation der Bearbeitung die unerwünschten Schwingungen nicht mehr auftreten, die aufgefundene Art der Bearbeitung abspeichert, so dass sie bei einer späteren Bearbeitung eines weiteren, zu dem Werkstück (2) gleichartigen Werkstücks wieder abrufbar ist.

6. Steuerprogramm für eine Steuereinrichtung (6) einer Werkzeugmaschine, wobei das Steuerprogramm Maschinencode (8) umfasst, wobei die Abarbeitung des Maschinencodes (8) durch die Steuereinrichtung (6) bewirkt, dass die Steuereinrichtung (6) ein Bearbeitungsverfahren nach einem der obigen Ansprüche ausführt.

7. Steuereinrichtung einer Werkzeugmaschine, wobei die Steuereinrichtung mit einem Steuerprogramm (7) nach Anspruch 6 programmiert ist, so dass die Steuereinrichtung im Betrieb ein Bearbeitungsverfahren nach einem der Ansprüche 1 bis 5 ausführt.

## Claims

1. Machining method for a workpiece (2) by way of a tool (1) of a machine tool,
- wherein a control device (6) of the machine tool receives a target machining (9), according to which the workpiece (2) is to be machined by the tool (1),
- wherein the control device (6) controls the machine tool so that the workpiece (2) is machined by the tool (1),
- wherein the control device (6), during the machining of the workpiece (2) by the tool (1), establishes by evaluating captured sensor signals (S) whether undesired vibrations are occurring or not,
- wherein predefined rules (10) are stored in the control device (6),
wherein the rules (10) define the manner in which, in the event of undesired vibrations occurring during the machining of the workpiece (2) by the tool (1), the machining of the workpiece (2) by the tool (1) is to be modified,
- wherein the control device (6), in the case in which the undesired vibrations do not occur, carries out the machining according to the target machining (9) and, in the case in which the undesired vibrations do occur, modifies the machining according to the rules (10),
- wherein the control device (6) of the machine tool, before the machining of the workpiece (2) by the tool (1), receives via an interface (11) a parameterisation of the rules (10),
- wherein the interface (11) is embodied as a human-machine interface and the control device (6) receives the parameterisation of rules (10) from an operator (12) of the machine tool, and
- wherein the control device (6) selects the rules (10) according to the parameterisation
wherein
the parameterisation specifies a hold time (T) during which the modified target machining is to be retained unchanged after a modification of the machining, wherein in the case in which, after a modification of the machining of the workpiece (2), the undesired vibrations no longer occur, the modification is cancelled again.

2. Machining method according to claim 1,
**characterised in**
**that** the parameterisation of the rules (10) specifies a sequence and/or a coupling of the change of a number of machining parameters (n, v) of the target machining (9) not influencing the contour of the workpiece (2).

3. Machining method according to claim 1 or 2,
**characterised in**
**that** the parameterisation of the rules (10) defines which machining parameter (n, v) of the target machining not influencing the contour of the workpiece (2) or which machining parameters (n, v) of the target machining not influencing the contour of the workpiece (2) will be changed.

4. Machining method according to one of the above claims,
**characterised in**
**that** the parameterisation of the rules (10) specifies the stages (δn, δv) in which the modification will be cancelled again.

5. Machining method according to one of the above claims
**characterised in**
**that** the control device (6), if after a modification of the machining the undesired vibrations no longer occur, then stores the type of machining found, so that it can be retrieved again for a later machining of a further workpiece similar to the workpiece (2),

6. Control program for a control device (6) of a machine tool, wherein the control program comprises machine code (8), wherein the processing of the machine code (8) by the control device (6) causes the control device (6) to carry out a machining method according to one of the above claims.

7. Control device of a machine tool, wherein the control device is programmed with a control program (7) according to claim 6, so that, when it is operating, the control device carries out a machining method according to one of claims 1 to 5.

## Revendications

1. Procédé d'usinage d'une pièce (2) par un outil (1) d'une machine-outil,
- dans lequel un dispositif (6) de commande de la machine-outil reçoit un usinage (9) de consigne, conformément auquel la pièce (2) doit être usinée par l'outil (1),
- dans lequel le dispositif (6) de commande commande la machine-outil, de manière à usiner la pièce (2) par l'outil (1),
- dans lequel le dispositif (6) de commande détermine, pendant l'usinage de la pièce (2) par l'outil (1) en évaluant des signaux (S) de capteur détectés, si des vibrations indésirables se produisent ou s'il ne s'en produit pas,
- dans lequel des règles (10) définies à l'avance sont mises en mémoire dans le dispositif (6) de commande,
dans lequel les règles (10) définissent la façon dont, dans les cas de vibrations indésirables se produisant pendant l'usinage de la pièce (2) par l'outil (1), l'usinage de la pièce (2) par l'outil (1) doit être modifié,
- dans lequel le dispositif (6) de commande, dans le cas où les vibrations indésirables ne se produisent pas, effectue l'usinage conformément à l'usinage (9) de consigne, et dans le cas où les vibrations indésirables se produisent, modifie l'usinage conformément aux règles (10),
- dans lequel le dispositif (6) de commande de la machine-outil reçoit, avant l'usinage de la pièce (2) par l'outil (1) par l'intermédiaire d'une interface (11), un paramétrage des règles (10),
- dans lequel l'interface (11) est constituée sous la forme d'une interface homme-machine et le dispositif (6) de commande reçoit le paramétrage des règles (10) par une personne (12) de service de la machine-outil, et
- dans lequel le dispositif (6) de commande paramétrise les règles (10) conformément au paramétrage,
dans lequel le paramétrage précise un temps (T) d'arrêt pendant lequel l'usinage de consigne modifié reste inchangé après une modification de l'usinage, dans lequel, dans le cas où, après une modification de l'usinage de la pièce (2), les vibrations indésirables ne se produisent plus, on revient sur la modification.

2. Procédé d'usinage suivant la revendication 1,
**caractérisé**
**en ce que** le paramétrage des règles (10) précise une séquence et/ou un couplage de la modification de plusieurs paramètres (n, v) d'usinage, n'influençant pas le contour de la pièce (2), de l'usinage (9) de consigne.

3. Procédé d'usinage suivant la revendication 1 ou 2,
**caractérisé**
**en ce que** le paramétrage des règles (10) fixe les paramètres (n, v) d'usinage, n'influençant pas le contour de la pièce (2), de l'usinage de consigne, qui sont modifiées et respectivement les paramètres (n, v) d'usinage, n'influençant pas le contour de la pièce (2), de l'usinage de consigne, qui sont modifiés.

4. Procédé d'usinage suivant l'une des revendications précédentes,
**caractérisé**
**en ce que** le paramétrage des règles (10) précise les stades (δn, δv), dans lesquels on doit revenir sur la modification.

5. Procédé d'usinage suivant l'une des revendications précédentes,
**caractérisé**
**en ce que** le dispositif (6) de commande met en mémoire, lorsque les vibrations indésirables ne se produisent plus après une modification d'usinage, le type d'usinage trouvé, de manière à pouvoir, lors d'un usinage ultérieur d'une autre pièce de même type que la pièce (2), le rappeler.

6. Programme de commande pour un dispositif (6) de machine-outil, dans lequel le programme de commande comprend des codes (8) de machine, dans lequel l'élaboration du code (8) de machine par le dispositif (6) de commande, fait que le dispositif (6) de commande exécute un procédé d'usinage suivant l'une des revendications précédentes.

7. Dispositif de commande d'une machine-outil, dans lequel le dispositif de commande est programmé par un programme (7) de commande suivant la revendication 6, de manière à ce que le dispositif de commande exécute en fonctionnement un procédé d'usinage suivant l'une des revendications 1 à 5.
